# EUROPEAN PATENT APPLICATION

(11) **EP 3 742 016 A1**
(43) Date of publication of application: **25.11.2020**
(21) Application number: 18900175.3
(22) Date of filing: 25.10.2018
(51) Int. Cl.: F16D 43/18

(54) **CENTRIFUGAL CLUTCH**

(30) Priority: 15.01.2018 JP 2018004298
(71) Applicant: Kabushiki Kaisha F.C.C., Hamamatsu-shi, Shizuoka 431-1394 (JP)
(72) Inventor: AONO, Kaoru, Hamamatsu-shi, Shizuoka 431-1304 (JP); ICHII, Masayuki, Hamamatsu-shi, Shizuoka 431-1304 (JP); YOKOMICHI, Yuta, Hamamatsu-shi, Shizuoka 431-1304 (JP); KINE, Yuta, Hamamatsu-shi, Shizuoka 431-1304 (JP); KATAOKA, Makoto, Hamamatsu-shi, Shizuoka 431-1304 (JP)
(74) Representative: Stöckeler, Ferdinand
(86) International application number: PCT/JP2018/039758
(87) International publication number: WO 2019/138649

(57) **Abstract**

Provided is a centrifugal clutch configured so that a clutch capacity can be increased with a simple configuration. A centrifugal clutch 200 includes a drive plate 210 to be directly rotatably driven by drive force of an engine. The drive plate 210 includes each of swing support pins 214 and guide portions 216. The swing support pin 214 is fitted in a pin slide hole 221 formed at a clutch weight 220 to swingably support the clutch weight 220. The guide portion 216 is formed in a cutout shape or a hole shape extending inclined to an outer rear side in a rotary drive direction of the drive plate 210. A protruding body 224 of the clutch weight 220 contacts the guide portion 216. The pin slide hole 221 is formed in a long hole shape allowing backward displacement of the clutch weight 220 in the rotary drive direction of the drive plate 210. The protruding body 224 is formed to protrude from the clutch weight 220.

## Description

### TECHNICAL FIELD

The present invention relates to a centrifugal clutch configured to block transmission of rotary drive force to a driven side until an engine reaches a predetermined number of rotations and transmit the rotary drive force to the driven side when the engine reaches the predetermined number of rotations.

### BACKGROUND ART

Typically, in, e.g., a motorcycle or a string trimmer, a centrifugal clutch configured to transmit rotary drive force to a driven side when an engine reaches a predetermined number of rotations is used. For example, in a centrifugal clutch disclosed in Patent Literature 1 below, a clutch weight provided at one drive plate gradually displaces to a clutch outer side in association with an increase in the number of rotations of the engine. A clutch shoe provided at the clutch weight friction-contacts the clutch weight. Moreover, a centrifugal clutch disclosed in Patent Literature 2 below is configured as follows. A cam body and a clutch weight are provided at each of first and second drive plates rotatable relative to each other. Part of the clutch weight climbs on the cam body. Thus, in the centrifugal clutch disclosed in Patent Literature 2 below, a so-called clutch capacity as the magnitude of transmittable power can be increased in such a manner that a clutch shoe strongly presses a clutch outer.

### CITATION LIST

### PATENT LITERATURE

PATENT LITERATURE 1: JP-A-2006-38124
PATENT LITERATURE 2: JP-A-2015-203429

### SUMMARY OF THE INVENTION

However, in the centrifugal clutch described in Patent Literature 1 above, the clutch weight gradually friction-contacts the clutch outer according to an increase in the number of rotations of the engine. Thus, time until the clutch is brought into a coupling state after the number of rotations of the engine has started increasing is long, and for this reason, there is a problem that fuel economy is lowered and a clutch capacity is small. On the other hand, in the centrifugal clutch described in Patent Literature 2 above, a drive plate to be rotated by rotation of an engine includes two drive plates of the first and second drive plates. Thus, there is a problem that due to an increase in the number of components, a configuration is complicated and a manufacturing burden is increased.

The present invention has been made to address the above-described problems. An object of the present invention is to provide a centrifugal clutch configured so that a clutch capacity can be increased with a simple configuration.

In order to achieve the above object, a feature of the present invention includes: a drive plate to be rotatably driven together with a driven pulley in response to drive force of an engine; a clutch outer having, outside the drive plate, a cylindrical surface provided concentrically with the drive plate; a clutch weight having a clutch shoe formed to extend along a circumferential direction of the drive plate and facing the cylindrical surface of the clutch outer, one end side of the clutch weight in the circumferential direction being rotatably attached onto the drive plate through a swing support pin and a pin slide hole, the other end side displacing toward a cylindrical surface side of the clutch outer; a protruding body provided to protrude toward the drive plate from the clutch weight; and a guide portion provided at the drive plate and allowing the protruding body to climb on the guide portion upon displacement of the other end side of the clutch weight, wherein the swing support pin is provided one of the drive plate or the clutch weight, and is formed to extend toward the other one of the drive plate or the clutch weight, and the pin slide hole is provided at the other one of the drive plate or the clutch weight and is formed in a long hole shape allowing backward displacement of one end side of the clutch weight in a rotary drive direction of the drive plate, and the swing support pin is slidably fitted in the pin slide hole. The long hole described herein is a through-hole or a blind hole extending long and thin as a whole, and a length in one direction is longer than that in a width direction perpendicular to the one direction.

According to the feature of the present invention configured as described above, in the centrifugal clutch, the drive plate and the clutch weight are coupled through the long-hole-shaped pin slide hole and the swing support pin slidably fitted to each other. Thus, the drive plate is rotatably driven such that the clutch shoe contacts the clutch outer, and in this manner, the clutch weight shifts to a rear side in the rotary drive direction, the protruding body climbs on the guide portion, and the clutch shoe quickly presses the clutch outer. That is, since the clutch shoe can be strongly pressed against the clutch outer even with one drive plate, the centrifugal clutch can increase the clutch capacity with a simple configuration.

Moreover, another feature of the present invention is that in the centrifugal clutch, the swing support pin is provided at the drive plate and the pin slide hole is provided at the clutch weight.

According to another feature of the present invention configured described above, in the centrifugal clutch, the swing support pin is provided at the drive plate, and the pin slide hole is provided at the clutch weight. Thus, a burden in production of the clutch weight can be reduced as compared to a case where the swing support pin is provided at the clutch weight.

Further, still another feature of the present invention is that in the centrifugal clutch, the pin slide hole is made of a more-easily-abradable material than that of the swing support pin. In this case, the pin slide hole can be, for example, made of a material having lower hardness than that of the swing support pin, such as a metal material or a resin material. Specifically, the pin slide hole can be made of a zinc material, and the swing support pin can be made of carbon steel or an iron-based sintered material, for example. Alternatively, the pin slide hole can be made of the same material as that of the swing support pin, for example. Thermal treatment or surface hardening such as coating is performed for the swing support pin so that abrasion resistance of the swing support pin can be more improved as compared to the pin slide hole.

According to still another feature of the present invention configured as described above, in the centrifugal clutch, the pin slide hole is made of the more-easily-abradable material than that of the swing support pin. Thus, the pin slide hole is more abraded than the swing support pin. In this case, the pin slide hole is formed at the clutch weight including the clutch shoe. Thus, the pin slide hole is updated by replacement of the clutch weight due to abrasion of the clutch shoe. That is, in the centrifugal clutch, the pin slide hole can be also simultaneously replaced with a new one by the process of replacing the clutch weight due to abrasion of the clutch shoe. Thus, a maintenance burden can be reduced.

In addition, still another feature of the present invention is that in the centrifugal clutch, the pin slide hole is formed as a long hole with such a length that collision with the swing support pin is avoided even in a case where one end side of the clutch weight displaces backward in the rotary drive direction of the drive plate.

According to still another feature of the present invention configured as described above, in the centrifugal clutch, the long hole is formed with such a length that a clearance is ensured without collision of the swing support pin with an end portion of the pin slide hole even in a case where one end side of the clutch weight displaces backward in the rotary drive direction of the drive plate. Thus, when the clutch weight displaces backward in the rotary drive direction of the drive plate, the guide portion can sufficiently climb on the protruding body. Consequently, the clutch shoe can be strongly pressed by the clutch outer.

Moreover, still another feature of the present invention is that in the centrifugal clutch, at least one of the protruding body or the guide portion includes a rotatably-supported roller.

According to still another feature of the present invention configured as described above, in the centrifugal clutch, at least one of the protruding body or the guide portion includes the rotatably-supported roller. Thus, when the protruding body and the guide portion are pressed against each other, at least one of these components including the roller turns. With this configuration, an increase in friction resistance and damage caused by abrasion due to friction slide between the protruding body and the guide portion can be suppressed. Note that in this case, one of the protruding body or the guide portion may include the roller, and the other one of the protruding body or the guide portion may be formed in a planar shape or a curved shape. Alternatively, each of the protruding body and the guide portion may include the roller.

Further, still another feature of the present invention is that in the centrifugal clutch, the guide portion is formed in a state in which part of the drive plate is bent.

According to still another feature of the present invention configured as described above, in the centrifugal clutch, the guide portion is formed in a state in which part of the drive plate is bent. Thus, as compared to a case where the guide portion includes a hole or a cutout, a greater area of contact with the protruding body can be more easily ensured, and damage of the guide portion and the protruding body can be reduced. Consequently, durability can be improved. Note that in this case, a portion of the guide portion formed by bending of the drive plate may directly contact the protruding body, or indirect contact may be made in such a manner that other components for contact with the protruding body are attached to such a bent portion.

In addition, still another feature of the present invention is that in the centrifugal clutch, the guide portion is formed in a hole shape or a cutout shape at the drive plate.

According to still another feature of the present invention configured as described above, in the centrifugal clutch, the guide portion is formed in the hole shape or the cutout shape at the drive plate. Thus, the guide portion can be easily formed by cutting or pressing. Moreover, in the centrifugal clutch, in a case where the guide portion is formed in the hole shape, stiffness of the guide portion itself and the entirety of the drive plate can be easily ensured.

Moreover, still another feature of the present invention is that in the centrifugal clutch, the guide portion has a stopper portion configured to restrict displacement of the other end side of the clutch weight toward the cylindrical surface side of the clutch outer by collision with the protruding body.

According to still another feature of the present invention configured as described above, in the centrifugal clutch, the guide portion is formed with the stopper portion configured to restrict displacement of the other end side of the clutch weight toward the cylindrical surface side of the clutch outer by collision with the protruding body. Thus, limitation in contact of the clutch shoe with the cylindrical surface of the clutch outer can be defined, and contact of the clutch weight with the cylindrical surface can be prevented.

Further, still another feature of the present invention is that the centrifugal clutch farther includes a pivot-point-side slide member provided between the swing support pin and the pin slide hole to slide the swing support pin and the pin slide hole and the swing support pin is slidably displaceably fitted through the pivot-point-side slide member.

According to still another feature of the present invention configured as described above, in the centrifugal clutch, the pivot-point-side slide member is provided between the swing support pin and the pin slide hole. Thus, slidability between the swing support pin and the pin slide hole can be improved, and the clutch weight can more smoothly turnably displace relative to the clutch outer. In this case, the pivot-point-side slide member may be provided in a non-rotatable non-slidable fixed state on the swing support pin, or may be provided in a rotatable slidable state.

In addition, still another feature of the present invention is that in the centrifugal clutch, each of the swing support pin and the pin slide hole is made of a metal material and the pivot-point-side slide member is made of a resin material.

According to still another feature of the present invention configured as described above, in the centrifugal clutch, each of the swing support pin and the pin slide hole is made of the metal material, and the pivot-point-side slide member is made of the resin material. Thus, slidability between each of the swing support pin and the pin slide hole and the pivot-point-side slide member is improved. Consequently, the clutch weight can more smoothly turnably displace relative to the clutch outer, and abrasion of the swing support pin and the pin slide hole can be prevented.

In this case, thermoplastic resin or thermosetting resin having thermal resistance and abrasion resistance can be used as the resin material forming the pivot-point-side slide member, and engineering plastic or super engineering plastic is preferable. Specifically, polyetheretherketone resin (PEEK), polyphenylene sulfide resin (PPS), polyamide-imide resin (PAI), fluorine resin (PTFE), or polyimide resin (PI) can be used as the thermoplastic resin. Diallyphthalate resin (PDAP), epoxy resin (EP), or silicon resin (SI) can be used as the thermosetting resin.

Moreover, still another feature of the present invention is that in the centrifugal clutch, the pivot-point-side slide member is rotatably slidably fitted onto the swing support pin.

According to still another feature of the present invention configured as described above, in the centrifugal clutch, the pivot-point-side slide member is rotatably slidably fitted onto the swing support pin. Thus, the slidability between the swing support pin and the pin slide hole can be improved, and therefore, the clutch weight can more smoothly turnably displace relative to the clutch outer.

Further, still another feature of the present invention is that the centrifugal clutch further includes an auxiliary pivot-point-side slide member provided between the swing support pin and the pivot-point-side slide member to slide the swing support pin and the pivot-point-side slide member.

According to still another feature of the present invention configured as described above, the centrifugal clutch further includes the auxiliary pivot-point-side slide member provided between the swing support pin and the pivot-point-side slide member to slide the swing support pin and the pivot-point-side slide member. Thus, slidability between the swing support pin and the pivot-point-side slide member can be improved, and the clutch weight can more smoothly turnably displace relative to the clutch outer. In this case, the auxiliary pivot-point-side slide member may be provided in a non-rotatable non-slidable fixed state on the swing support pin, or may be provided in a rotatable slidable state.

In addition, still another feature of the present invention is that in the centrifugal clutch, one of portions of the protruding body and the guide portion sliding on each other is made of a metal material and the other one of the portions is made of a resin material.

According to still another feature of the present invention configured as described above, in the centrifugal clutch, one of the portions of the protruding body and the guide portion sliding on each other is made of the metal material, and the other one of the portions is made of the resin material. Thus, slide resistance between the protruding body and the guide portion is reduced. Consequently, these components can smoothly slide on each other, and abrasion of these components can be prevented. Further, the clutch weight can more smoothly turnably displace relative to the clutch outer. In this case, the resin material forming the protruding body or the guide portion can be a resin material similar to that of the pivot-point-side slide member.

Moreover, in the centrifugal clutch, each of the swing support pin and the pin slide hole is made of the metal material, the pivot-point-side slide member is made of the resin material, and one of the portions of the protruding body and the guide portion sliding on each other is made of the metal material and the other one of the portions is made of the resin material. Thus, the clutch weight can more smoothly swingably displace.

Further, still another feature of the present invention is that in the centrifugal clutch, the protruding body is rotatably provided at a protruding body support pin provided at the clutch weight and includes an auxiliary swing-side slide member provided between the protruding body support pin and the protruding body to slide the protruding body support pin and the protruding body.

According to still another feature of the present invention configured as described above, in the centrifugal clutch, the protruding body is rotatably provided at the protruding body support pin provided at the clutch weight. Further, the protruding body includes the auxiliary swing-side slide member provided between the protruding body support pin and the protruding body to slide the protruding body support pin and the protruding body. Thus, slidability between the protruding body support pin and the protruding body can be improved, and the clutch weight can more smoothly turnably displace relative to the clutch outer. In this case, the auxiliary swing-side slide member may be provided in a non-rotatable non-slidable fixed state on the protruding body support pin, or may be provided in a rotatable slidable state.

Moreover, the auxiliary swing-side slide member is formed in such a tubular shape that the auxiliary swing-side slide member is slidable on each of the protruding body support pin and the protruding body. Thus, even in a case where the auxiliary swing-side slide member is fixed on the protruding body support pin or a case where the auxiliary swing-side slide member and the protruding body are fixed to each other, the slidability between the protruding body support pin and the protruding body can be ensured. Further, the auxiliary swing-side slide member can be made of an aluminum material or a resin material similar to that of the pivot-point-side slide member.

### BRIEF DESCRIPTION OF THE DRAWINGS

Fig. 1 is a plan sectional view schematically illustrating a configuration of a power transmission mechanism including a centrifugal clutch according to the present invention.
Fig. 2 is a side view of the centrifugal clutch as seen from a 2-2 line illustrated in Fig. 1.
Figs. 3(A) and 3(B) schematically illustrate an external configuration of a drive plate in the centrifugal clutch illustrated in each of Figs. 1 and 2, Fig. 3(A) being a perspective view of the drive plate as seen from a 2-2 line side illustrated in Fig. 1, Fig. 3(B) being a perspective view of the drive plate as seen from the opposite side of Fig. 3(A).
Figs. 4(A) and 4(B) illustrate an external configuration of a clutch weight in the centrifugal clutch illustrated in each of Figs. 1 and 2, Fig. 4(A) being a perspective view of the clutch weight as seen from the 2-2 line side illustrated in Fig. 1, Fig. 4(B) being a perspective view as seen from the opposite side of Fig. 4(A).
Fig. 5 is a partially-enlarged view illustrating a disconnection state in which a clutch shoe does not contact a clutch outer in the centrifugal clutch illustrated in Fig. 2.
Fig. 6 is a partially-enlarged view illustrating a coupling state in which the clutch shoe contacts the clutch outer with no abrasion of the clutch shoe in the centrifugal clutch illustrated in Fig. 5.
Fig. 7 is a partially-enlarged view illustrating a state in which the clutch weight tilts inward in a radial direction of the drive plate in the centrifugal clutch illustrated in Fig. 6.
Fig. 8 is a partially-enlarged view illustrating a coupling state in which the clutch shoe contacts the clutch outer with abrasion at a large portion of the clutch shoe in the centrifugal clutch illustrated in Fig. 6.
Fig. 9 is a perspective view schematically illustrating an external configuration of a drive plate in a centrifugal clutch according to a variation of the present invention.
Fig. 10 is a perspective view schematically illustrating an external configuration of a clutch weight in a centrifugal clutch according to another variation of the present invention.
Fig. 11 is a perspective view schematically illustrating an external configuration of a drive plate in a centrifugal clutch according to still another variation of the present invention.
Fig. 12 is a perspective view schematically illustrating an external configuration of a clutch weight in a centrifugal clutch according to still another variation of the present invention.
Fig. 13 is a perspective view schematically illustrating an external configuration of a clutch weight in a centrifugal clutch according to still another variation of the present invention.
Fig. 14 is a perspective view schematically illustrating an external configuration of a clutch weight in a centrifugal clutch according to still another variation of the present invention.
Fig. 15 is a perspective view schematically illustrating an external configuration of a drive plate in a centrifugal clutch according to still another variation of the present invention.
Fig. 16 is a perspective view schematically illustrating an external configuration of a centrifugal clutch according to still another variation of the present invention.
Fig. 17 is a perspective view schematically illustrating the external configuration of the centrifugal clutch illustrated in Fig. 16 as seen from an opposite side.
Fig. 18 is a perspective view schematically illustrating an external configuration of a drive plate in the centrifugal clutch illustrated in Fig. 16.

### DESCRIPTION OF THE EMBODIMENTS

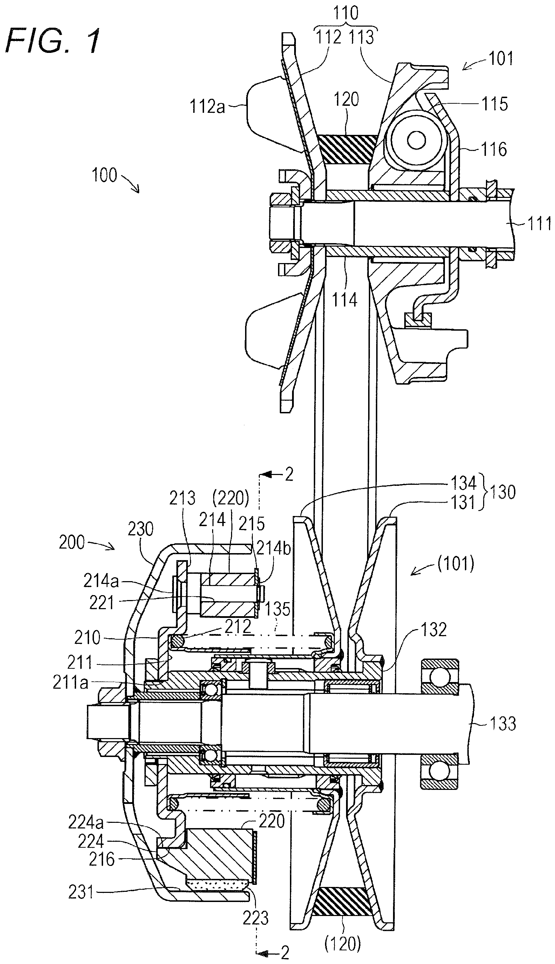

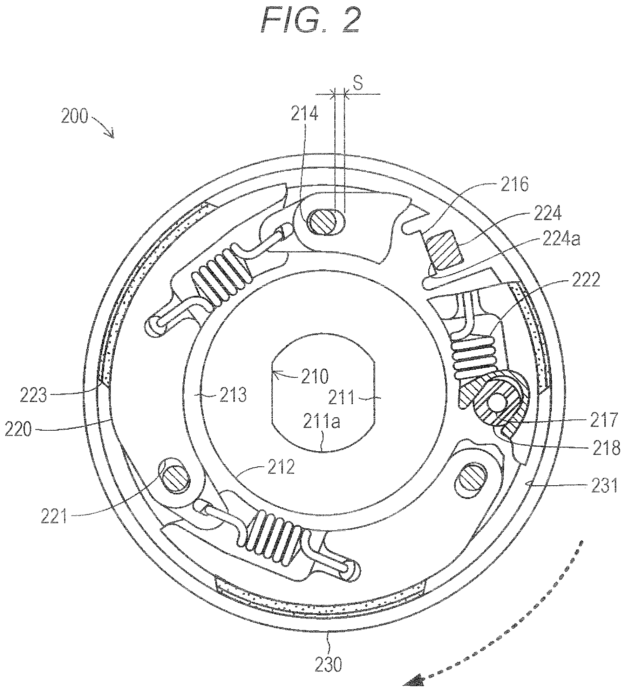

Hereinafter, one embodiment of a centrifugal clutch according to the present invention will be described with reference to the drawings. Fig. 1 is a plan sectional view schematically illustrating a configuration of a power transmission mechanism 100 including a centrifugal clutch 200 according to the present invention. Moreover, Fig. 2 is a side view of the centrifugal clutch 200 as seen from a 2-2 line illustrated in Fig. 1. The power transmission mechanism 100 including the centrifugal clutch 200 is a mechanical device mainly provided between an engine and a rear wheel as a drive wheel in a motorcycle such as a scooter to transmit rotary drive force to the rear wheel or block such transmission while automatically changing a reduction ratio with respect to the number of rotations of the engine.

### (Configuration of Centrifugal Clutch 200)

The power transmission mechanism 100 mainly includes each of a transmission 101 and the centrifugal clutch 200. The transmission 101 is a mechanical device configured to reduce speed steplessly to transmit the rotary drive force from the not-shown engine to the centrifugal clutch 200. The transmission 101 mainly includes each of a drive pulley 110, a V-belt 120, and a driven pulley 130. Of these components, the drive pulley 110 is provided on a crankshaft 111 extending from the engine, and is a mechanical device to be directly rotatably driven by the rotary drive force of the engine. The drive pulley 110 mainly includes each of a stationary drive plate 112 and a movable drive plate 113.

The stationary drive plate 112 is a component to be rotatably driven in a state in which the V-belt 120 is sandwiched and held by the stationary drive plate 112 and the movable drive plate 113. The stationary drive plate 112 is formed in such a manner that a metal material is formed into a conical tubular shape. The stationary drive plate 112 is attached onto the crankshaft 111 in a fixed manner in a state in which a raised-side surface of the stationary drive plate 112 faces a movable drive plate 113 side (an engine side). That is, the stationary drive plate 112 is constantly rotatably driven together with the crankshaft 111. Moreover, multiple radiation fins 112a are, on a recessed-side surface of the stationary drive plate 112, provided radially about the axis of the crankshaft 111.

The movable drive plate 113 is a component to be rotatably driven in a state in which the V-belt 120 is sandwiched and held by the movable drive plate 113 and the stationary drive plate 112. The movable drive plate 113 is formed in such a manner that a metal material is formed into a conical tubular shape. The movable drive plate 113 is attached to the crankshaft 111 in a state in which a raised-side surface of the movable drive plate 113 faces the stationary drive plate 112. In this case, the movable drive plate 113 is, through an impregnated bush, attached onto a sleeve bearing 114 fitted onto the crankshaft 111 in a fixed manner. The movable drive plate 113 is attached to the sleeve bearing 114 to freely slide in each of an axial direction and a circumferential direction.

On the other hand, on a recessed-side surface of the movable drive plate 113, multiple roller weights 115 are provided in a state in which the roller weights 115 are pressed by a lamp plate 116. The roller weight 115 is a component configured to displace outward in a radial direction according to an increase in the number of rotations of the movable drive plate 113 to press the movable drive plate 113 to a stationary drive plate 112 side in cooperation with the lamp plate 116. The roller weight 115 is formed in such a manner that a metal material is formed into a tubular shape. Moreover, the lamp plate 116 is a component configured to press the roller weights 115 to the movable drive plate 113 side. The lamp plate 116 is formed in such a manner that a metal plate is bent to the movable drive plate 113 side.

The V-belt 120 is a component configured to transmit rotary drive force of the drive pulley 110 to the driven pulley 130. The V-belt 120 is formed in such an endless ring shape that a core wire is covered with a resin material. The V-belt 120 is arranged between the stationary drive plate 112 and the movable drive plate 113 and between a stationary driven plate 131 and a movable driven plate 134 of the driven pulley 130, and is bridged between the drive pulley 110 and the driven pulley 130.

The driven pulley 130 is a mechanical device to be rotatably driven by the rotary drive force from the engine, the rotary drive force being transmitted through each of the drive pulley 110 and the V-belt 120. The driven pulley 130 mainly includes each of the stationary driven plate 131 and the movable driven plate 134.

The stationary driven plate 131 is a component to be rotatably driven in a state in which the V-belt 120 is sandwiched and held by the stationary driven plate 131 and the movable driven plate 134. The stationary driven plate 131 is formed in such a manner that a metal material is formed into a conical tubular shape. The stationary driven plate 131 is attached onto a driven sleeve 132 in a fixed manner in a state in which a raised-side surface of the stationary driven plate 131 faces a movable driven plate 134 side.

The driven sleeve 132 is a metal tubular component to be rotatably driven together with the stationary driven plate 131. The driven sleeve 132 is attached to a drive shaft 133 to freely rotate relative to the drive shaft 133 through a bearing. The drive shaft 133 is a metal rotary shaft body configured to drive, through the not-shown transmission, the rear wheel of the motorcycle on which the power transmission mechanism 100 is mounted. In this case, the rear wheel of the motorcycle is attached to one (the right side as viewed in the figure) end portion of the drive shaft 133.

The movable driven plate 134 is a component to be rotatably driven in a state in which the V-belt 120 is sandwiched and held by the movable driven plate 134 and the stationary driven plate 131. The movable driven plate 134 is formed in such a manner that a metal material is formed into a conical tubular shape. The movable driven plate 134 is fitted onto the driven sleeve 132 to freely slide in the axial direction in a state in which a raised-side surface of the movable driven plate 134 faces the stationary driven plate 131.

On the other hand, a torque spring 135 is, on a recessed-side surface of the movable driven plate 134, provided between such a recessed-side surface and a drive plate 210 of the centrifugal clutch 200. The torque spring 135 is a coil spring configured to elastically press the movable driven plate 134 to a stationary driven plate 131 side. That is, the transmission 101 steplessly changes the number of rotations of the engine according to a size relationship between a diameter defined by a clearance between the stationary drive plate 112 and the movable drive plate 113 and provided to sandwich the V-belt 120 and a diameter defined by a clearance between the stationary driven plate 131 and the movable driven plate 134 and provided to sandwich the V-belt 120. Moreover, the centrifugal clutch 200 is provided on each tip end side of the driven sleeve 132 and the drive shaft 133.

The centrifugal clutch 200 is a mechanical device configured to transmit the rotary drive force, which has been transmitted through the transmission 101, of the engine to the drive shaft 133 or block such transmission. The centrifugal clutch 200 mainly includes each of the drive plate 210, three clutch weights 220, and a clutch outer 230.

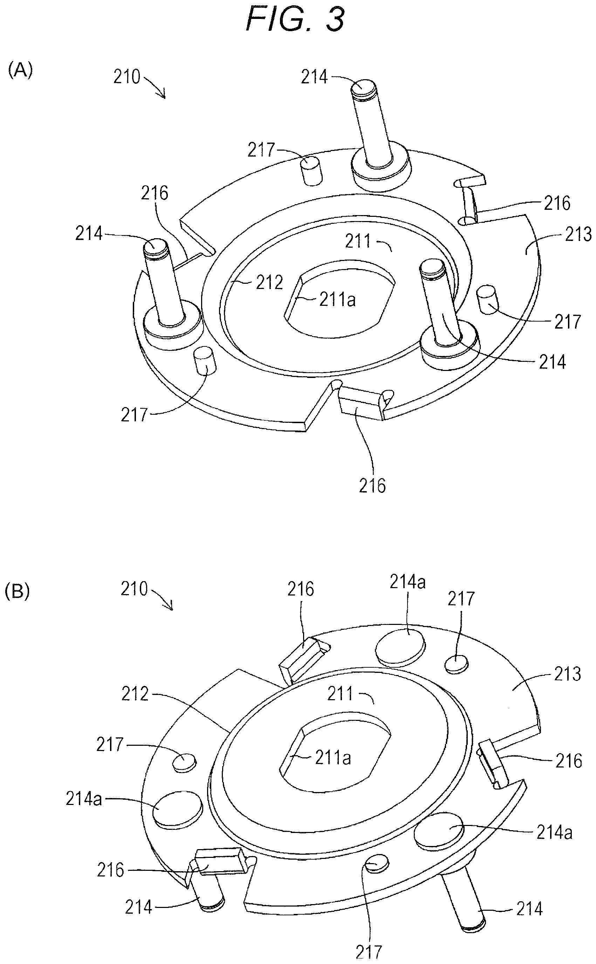

The drive plate 210 is a component to be rotatably driven together with the driven sleeve 132. The drive plate 210 is formed in such a manner that a metal material is formed into a stepped discoid shape. More specifically, as illustrated in each of Figs. 3(A) and 3(B), the drive plate 210 is formed with a through-hole 211a at a center portion of a flat plate-shaped bottom portion 211 such that the driven sleeve 132 penetrates the through-hole 211a, and is formed with a flange portion 213 at a tip end portion of a tube portion 212 standing at the periphery of the bottom portion 211 such that the flange portion 213 projects in a flange shape. At the flange portion 213, three swing support pins 214, three guide portions 216, and three damper receiving pins 217 are provided at equal intervals along the circumferential direction.

The swing support pin 214 is a component configured to turnably support one end side of the later-described clutch weight 220 to swing the other end side. The swing support pin 214 is formed as a metal stepped rod. In this case, the swing support pin 214 is made of a less-friction material than a material forming an inner peripheral surface of a pin slide hole 221 of the clutch weight 220. Specifically, the swing support pin 214 is made of, e.g., carbon steel or an iron-based sintered material. The swing support pin 214 is attached to the flange portion 213 in a fixed manner by an attachment bolt 214a. Moreover, the swing support pin 214 provides support in a state in which the clutch weight 220 is sandwiched through each of an E-ring 214b attached to a tip end portion of the swing support pin 214 and a ring-shaped side plate 215 arranged between the E-ring 214b and the clutch weight 220.

The guide portion 216 is a portion for displacing the clutch weight 220 to a clutch outer 230 side in cooperation with a later-described protruding body 224. The guide portion 216 includes a flat inclined surface facing the outside of the drive plate 210 in the radial direction. More specifically, the guide portion 216 is formed to extend inclined toward an outer rear side in a rotary drive direction of the drive plate 210. The guide portion 216 is formed in such a manner that part of an outer edge portion of the flange portion 213 is bent in an inward direction and a direction at right angle to a plate surface. In this case, an outer peripheral side of the drive plate 210 with respect to the guide portion 216 is cut out such that the protruding body 224 is positioned in such a cutout.

The damper receiving pin 217 is a component configured to support a damper 218. The damper receiving pin 217 is formed as a metal rod. The damper 218 is a component configured to guide swing motion for causing the other end side of the clutch weight 220 to approach or separate from the clutch outer 230 and serving as a buffer material upon separation. The damper 218 is formed in such a manner that a rubber material is formed into a cylindrical shape. The damper 218 is fitted onto an outer peripheral surface of the damper receiving pin 217 in a fixed manner.

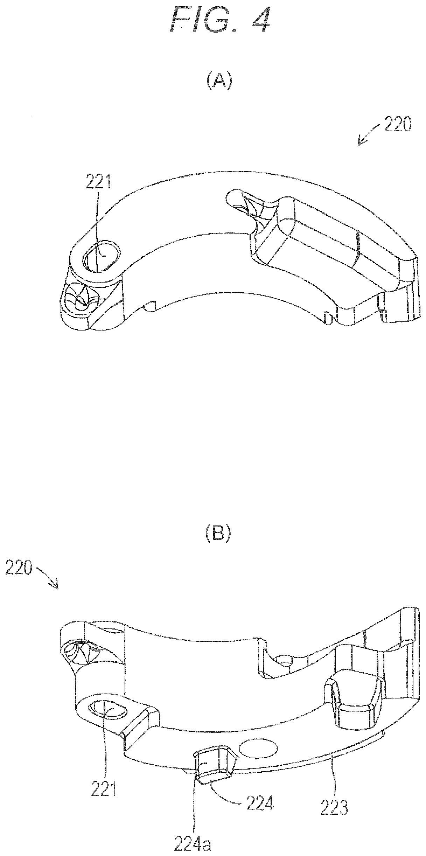

As illustrated in each of Figs. 4(A) and 4(B), each of three clutch weights 220 is a component configured to contact or separate from the clutch outer 230 through a clutch shoe 223 according to the number of rotations of the drive plate 210 to transmit the rotary drive force from the engine to the drive shaft 133 or block such transmission. The clutch weight 220 is formed in such a manner that a metal material (e.g., a zinc material) is formed into a curved shape extending along the circumferential direction of the drive plate 210.

In each of these clutch weights 220, the other end side is coupled to adjacent one of the clutch weights 220 by a coupling spring 222 in a state in which one end side is turnably supported by the swing support pin 214 through the pin slide hole 221. The other end side is pulled in the inward direction of the drive plate 210. That is, the clutch weight 220 is supported on the drive plate 210 through each of the swing support pin 214 and the pin slide hole 221 in a state in which the other end side provided with the clutch shoe 223 is swingable relative to the clutch outer 230.

Note that for the sake of simplicity in description of a configuration of the clutch weight 220, Fig. 2 illustrates surfaces, which are cut in different thickness directions, of two spots at one of three clutch weights 220 and does not show a center portion in a longitudinal direction. Moreover, Fig. 2 does not show each of the E-ring 214b and the side plate 215.

The pin slide hole 221 is a portion in which the swing support pin 214 of the drive plate 210 is turnably and slidably fitted. The pin slide hole 221 is formed as a through-hole penetrating the clutch weight 220 in the thickness direction thereof. The pin slide hole 221 is formed in a long hole shape such that one end side of the clutch weight 220 displaces backward in the rotary drive direction of the drive plate 210 when the clutch shoe 223 contacts the clutch outer 230.

In this case, a long hole forming the pin slide hole 221 is formed such that a length in one direction is longer than that in a width direction perpendicular to the one direction and the entirety of the long hole extends long and thin. More specifically, the pin slide hole 221 is formed to have an inner diameter as a clearance fit slightly larger than the outer diameter of the swing support pin 214 in the width direction as the radial direction of the drive plate 210. On the other hand, a longitudinal direction of the pin slide hole 221 extends in an arc shape or a linear shape in such a direction that displacement of the clutch weight 220 to a side on which pressing of the guide portion 216 of the drive plate 210 against the protruding body 224 is increased and climbing is more promoted is allowed.

In the present embodiment, the pin slide hole 221 is formed to extend in an arc shape to the front side in the rotary drive direction of the drive plate 210. In this case, in the present embodiment, the pin slide hole 221 is formed along an arc about the center of rotation of the drive plate 210. The pin slide hole 221 may be formed along an arc about other positions.

The clutch shoe 223 is a component configured to increase friction force for an inner peripheral surface of the clutch outer 230. The clutch shoe 223 is formed in such a manner that a friction material is formed into a plate shape extending in an arc shape. The clutch shoe 223 is provided on an outer peripheral surface of each clutch weight 220 on a tip end side opposite to the pin slide hole 221. Moreover, the protruding body 224 is formed at a position facing the guide portion 216 on a surface of each clutch weight 220 facing the drive plate 210.

The protruding body 224 is a component configured to press the clutch weight 220 to the clutch outer 230 side. The protruding body 224 is formed to protrude from the surface of the clutch weight 220 facing the drive plate 210. More specifically, the protruding body 224 has a slide portion 224a that is formed at the drive plate 210, faces the guide portion 216, and is configured to slide on such a guide portion 216. As in the guide portion 216, the slide portion 224a is formed to extend inclined to the outer rear side in the rotary drive direction of the drive plate 210. In the present embodiment, the slide portion 224a includes an arc-shaped curved surface projecting in a raised shape toward a guide portion 216 side.

The clutch outer 230 is a component to be rotatably driven together with the drive shaft 133. The clutch outer 230 is formed in such a manner that a metal material is formed into a cup shape covering the outer peripheral surface of the clutch weight 220 from the drive plate 210. That is, the clutch outer 230 has a cylindrical surface 231 configured to friction-contact the clutch shoe 223 of the clutch weight 220 displaced to the outer peripheral side of the drive plate 210.

### (Operation of Centrifugal Clutch 200)

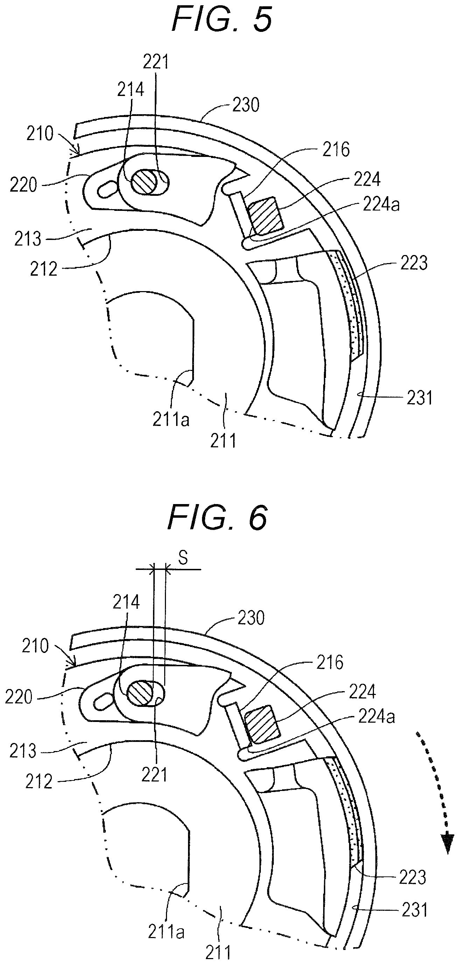

Next, operation of the centrifugal clutch 200 configured as described above will be described with reference to Figs. 5 to 8. Note that in Figs. 5 to 8, the E-ring 214b, the side plate 215, and the coupling spring 222 are not shown. Moreover, in Figs. 6 to 8, rotary drive directions of the drive plate 210, the clutch outer 230, and the protruding body 224 in the centrifugal clutch 200 are each indicated by dashed arrows.

The centrifugal clutch 200 functions as part of the power transmission mechanism 100 arranged between the engine and the rear wheel as the drive wheel in the motorcycle (e.g., the scooter). First, in a case where the engine is in an idling state, the centrifugal clutch 200 blocks transmission of the drive force between the engine and the drive shaft 133 as illustrated in Fig. 5. Specifically, in the centrifugal clutch 200, the drive plate 210 is rotatably driven and the clutch weight 220 is rotatably driven by the rotary drive force of the engine transmitted through the transmission 101.

However, in this case, in the centrifugal clutch 200, centrifugal force acting on the clutch weight 220 is smaller than elastic force (pull force) of the coupling spring 222. Thus, the clutch shoes 223 do not contact the cylindrical surface 231 of the clutch outer 230, and therefore, the rotary drive force of the engine is not transmitted to the drive shaft 133. Moreover, in this case, the protruding body 224 maintains a state in which the protruding body 224 is pressed to contact the guide portion 216 by the elastic force (the pull force) of the coupling spring 222.

Then, the clutch weight 220 is pulled by the pull force of one of two coupled coupling springs 222 that pulls from a position far from the swing support pin 214 (the coupling spring 222 hooked at a position adjacent to the protruding body 224). In this case, the pin slide hole 221 is formed in a long hole shape, and therefore, the clutch weight 220 displaces to the side of the coupling spring 222 hooked at the position adjacent to the protruding body 224. With this configuration, the swing support pin 214 is positioned at a rear end portion of the pin slide hole 221 in the rotary drive direction of the drive plate 210 (see Fig. 5).

On the other hand, the centrifugal clutch 200 transmits the rotary drive force of the engine to the drive shaft 133 according to an increase in the number of rotations of the engine by driver's accelerator operation in the motorcycle. Specifically, in the centrifugal clutch 200, the centrifugal force acting on the clutch weight 220 becomes greater than the elastic force (the pull force) of the coupling spring 222 as the number of rotations of the engine increases, as illustrated in Fig. 6. Thus, the clutch weight 220 turnably displaces outward in the radial direction about the swing support pin 214. That is, in the centrifugal clutch 200, the clutch weight 220 turnably displaces to a cylindrical surface 231 side of the clutch outer 230 against the elastic force (the pull force) of the coupling spring 222 as the number of rotations of the engine increases. As a result, the clutch shoe 223 contacts the cylindrical surface 231.

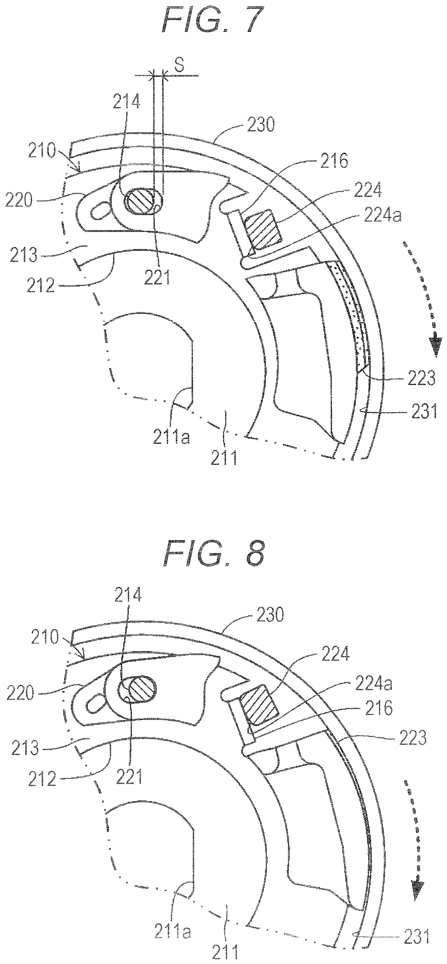

In a case where the clutch shoe 223 contacts the cylindrical surface 231, the clutch weight 220 receives, as illustrated in Fig. 7, reactive force in the opposite direction of the rotary drive direction through the clutch shoe 223. In this case, the pin slide hole 221 is formed in the long hole shape along the circumferential direction of the drive plate 210, and the swing support pin 214 is positioned at the rear end portion of the pin slide hole 221 in the rotary drive direction of the drive plate 210. That is, the clutch weight 220 is in a state in which backward displacement in the rotary drive direction of the drive plate 210 is allowed. Thus, the clutch weight 220 relatively displaces in the opposite direction of the rotary drive direction of the drive plate 210 by the reactive force received through the clutch shoe 223.

Accordingly, the protruding body 224 formed at the clutch weight 220 is strongly pressed against the guide portion 216. Thus, in the clutch weight 220, the clutch shoe 223 is pushed to the clutch outer 230 side on the outside in the radial direction and is pressed against the cylindrical surface 231 as the protruding body 224 climes on the guide portion 216.

As a result, in the centrifugal clutch 200, after the clutch shoes 223 have contacted the cylindrical surface 231 of the clutch outer 230, the clutch shoes 223 are pressed against the cylindrical surface 231 in extremely-short time (in other words, instantaneously). Thus, the centrifugal clutch 200 is brought into a coupling state in which the rotary drive force of the engine is fully transmitted to the drive shaft 133. That is, the clutch weight 220 is brought into a state in which the clutch weight 220 enters a portion between the guide portion 216 and the clutch outer 230 in a wedge manner.

In this case, the pin slide hole 221 is formed with such a length that contact with the swing support pin 214 is avoided in a state in which the clutch weight 220 enters the portion between the guide portion 216 and the clutch outer 230 in the wedge manner. That is, in the pin slide hole 221, a clearance S is ensured between the pin slide hole 221 and the swing support pin 214 even in a state in which the clutch weight 220 enters the portion between the guide portion 216 and the clutch outer 230 in the wedge manner. This prevents interference with entrance of the clutch weight 220 into the portion between the guide portion 216 and the clutch outer 230.

In this coupling state, the centrifugal clutch 200 maintains a state in which the clutch shoes 223 are pressed against the cylindrical surface 231 of the clutch outer 230. Thus, the drive plate 210 and the clutch outer 230 are rotatably driven together. With this configuration, the rear wheel of the motorcycle is rotatably driven by the rotary drive force of the engine so that the motorcycle can run.

On the other hand, in a case where the number of rotations of the engine decreases, the centrifugal clutch 200 blocks transmission of the rotary drive force of the engine to the drive shaft 133. Specifically, in the centrifugal clutch 200, the centrifugal force acting on the clutch weight 220 becomes smaller than the elastic force (the pull force) of the coupling spring 222 as the number of rotations of the engine decreases. Thus, the clutch weight 220 turnably displaces inward in the radial direction about the swing support pin 214.

In this case, the pin slide hole 221 is formed in the long hole shape along the circumferential direction of the drive plate 210, and the swing support pin 214 is positioned on the front side with respect to the rear end portion in the rotary drive direction of the drive plate 210 in the pin slide hole 221 (see Fig. 7). That is, the clutch weight 220 is in a state in which forward displacement in the rotary drive direction of the drive plate 210 is allowed. Thus, the clutch weight 220 rotatably displaces relative to the drive plate toward the front in the rotary drive direction of the drive plate 210 by the elastic force (the pull force) of the coupling spring 222. In this case, the clutch weight 220 displaces while the protruding body 224 is sliding on the guide portion 216.

Accordingly, the clutch weight 220 returns to an original position (a position upon idling as described above). That is, the centrifugal clutch 200 is brought into a disconnection state in which the clutch shoes 223 do not contact the clutch outer 230 and no rotary drive force is transmitted. Moreover, the clutch weight 220 displaces to the side of one of two coupled coupling springs 222 that pulls from the position far from the swing support pin 214 (the coupling spring 222 hooked at the position adjacent to the protruding body 224). Thus, the swing support pin 214 is positioned at the rear end portion in the rotary drive direction of the drive plate 210 in the pin slide hole 221 (see Fig. 5).

Moreover, even in a case where the thickness of the clutch shoe 223 decreases due to abrasion, the centrifugal clutch 200 can be brought into the coupling state in such a manner that the clutch shoes 223 are quickly pressed against the cylindrical surface 231 of the clutch outer 230. That is, in the centrifugal clutch 200, the slide portion 224a of the protruding body 224 is formed in a raised arc shape as illustrated in Fig. 8. Thus, even in a case where the clutch shoe 223 is abraded, the orientation of the protruding body 224 with respect to the guide portion 216 changes by an amount corresponding to such an abrasion amount. Consequently, the force of pressing the clutch shoe 223 against the cylindrical surface 231 of the clutch outer 230 is maintained.

Further, in this case, the pin slide hole 221 is formed with such a length that even in a case where the clutch weight 220 enters the portion between the guide portion 216 and the clutch outer 230 in the wedge manner by the amount corresponding to the abrasion amount of the clutch shoe 223, the clearance S for avoiding contact with the swing support pin 214 is ensured. Thus, the pin slide hole 221 does not interfere with entrance of the clutch weight 220 into the portion between the guide portion 216 and the clutch outer 230 even in a case where the clutch weight 220 enters the portion between the guide portion 216 and the clutch outer 230 in the wedge manner by the amount corresponding to the abrasion amount of the clutch shoe 223.

As can be understood from operation description above, the drive plate 210 and the clutch weights 220 are, according to the above-described embodiment, coupled through the long-hole-shaped pin slide holes 221 and the swing support pins 214 slidably fitted to each other in the centrifugal clutch 200. Thus, the drive plate 210 is rotatably driven such that the clutch shoe 223 contacts the clutch outer 230, and in this manner, the clutch weight 220 shifts to the rear side in the rotary drive direction, the protruding body 224 climbs on the guide portion 216, and the clutch shoe 223 quickly presses the clutch outer 230. That is, since the clutch shoes 223 can be strongly pressed against the clutch outer 230 even with one drive plate 210, the centrifugal clutch 200 can increase a clutch capacity with a simple configuration.

Further, implementation of the present invention is not limited to the above-described embodiment, and various changes can be made without departing from the gist of the present invention. Note that in each of the following variations, the same reference numerals are used to represent components similar to those of the above-described embodiment, and description thereof will be omitted.

For example, in the above-described embodiment, the centrifugal clutch 200 is configured such that the swing support pins 214 are provided at the drive plate 210 and the pin slide holes 221 are provided at the clutch weights 220. However, one of the swing support pin 214 or the pin slide hole 221 may be provided at the drive plate 210 or the clutch weight 220, and the other one of the swing support pin 214 or the pin slide hole 221 may be provided at the clutch weight 220 or the drive plate 210. Thus, the centrifugal clutch 200 can be also configured such that the swing support pins 214 are provided at the clutch weights 220 and the pin slide holes 221 are provided at the drive plate 210.

Moreover, in the above-described embodiment, the pin slide hole 221 is formed as the arc-shaped through-hole. However, it is enough to form the pin slide hole 221 as the long hole allowing backward displacement of the clutch weight 220 in the rotary drive direction of the drive plate 210 in a state (see Fig. 5) in which the clutch shoe 223 of the clutch weight 220 is most separated from the cylindrical surface 231 of the clutch outer 230. Thus, the pin slide hole 221 is not limited to that of the above-described embodiment.

Thus, the pin slide hole 221 can be formed in a linear shape extending in a tangential direction perpendicular to the radial direction of the drive plate 210. Alternatively, the pin slide hole 221 can be also formed as a so-called blind hole opening on one side and closed on the other side.

Further, in the above-described embodiment, the pin slide hole 221 is formed as the long hole with such a length that the clearance S for avoiding collision with the swing support pin 214 is ensured even in a case where the clutch weight 220 displaces to the rear side in the rotary drive direction of the drive plate 210. With this configuration, when the clutch weight 220 displaces backward in the rotary drive direction of the drive plate 210, the protruding body 224 can sufficiently climb on the guide portion 216 in the centrifugal clutch 200. Thus, the clutch shoe 223 can be strongly pressed by the clutch outer 230.

However, the pin slide hole 221 can be also formed as a long hole with such a length that the pin slide hole 221 collides with the swing support pin 214 in a case where the clutch weight 220 displaces to the rear side in the rotary drive direction of the drive plate 210. According to such a configuration, in the centrifugal clutch 200, when the clutch weight 220 displaces backward in the rotary drive direction of the drive plate 210, climbing of the protruding body 224 on the guide portion 216 is restricted by collision of the swing support pin 214 with an end portion of the pin slide hole 221. Thus, the pressing force of the clutch shoe 223 against the clutch outer 230 can be restricted.

In addition, in the above-described embodiment, in the centrifugal clutch 200, the pin slide hole 221 is made of a more-easily-abradable material than that of the swing support pin 214, specifically the zinc material. Thus, in the centrifugal clutch 200, the pin slide hole 221 is made of the more-easily-abradable material than that of the swing support pin 214, and therefore, the pin slide hole 221 is more abraded than the swing support pin 214. In this case, the pin slide hole 221 is formed at the clutch weight 220 including the clutch shoe 223. Thus, the pin slide hole 221 is updated by replacement of the clutch weight 220 due to abrasion of the clutch shoe 223. That is, in the centrifugal clutch 200, the pin slide hole 221 can be also simultaneously replaced with a new one by the process of replacing the clutch weight 220 due to abrasion of the clutch shoe 223. Thus, a maintenance burden can be reduced.

Moreover, in the above-described embodiment, in the centrifugal clutch 200, the swing support pin 214 and the pin slide hole 221 are both made of the metal materials. However, in the centrifugal clutch 200, one of portions of the swing support pin 214 and the pin slide hole 221 sliding on each other can be made of the metal material, and the other one of the portions can be made of a resin material. In this case, thermoplastic resin or thermosetting resin having thermal resistance and abrasion resistance can be used as the resin material, and engineering plastic or super engineering plastic is preferable. Specifically, polyetheretherketone resin (PEEK), polyphenylene sulfide resin (PPS), polyamide-imide resin (PAI), fluorine resin (PTFE), or polyimide resin (PI) can be used as the thermoplastic resin. Diallyphthalate resin (PDAP), epoxy resin (EP), or silicon resin (SI) can be used as the thermosetting resin. Note that these resin materials will be hereinafter sometimes referred to as "various resin materials described above."

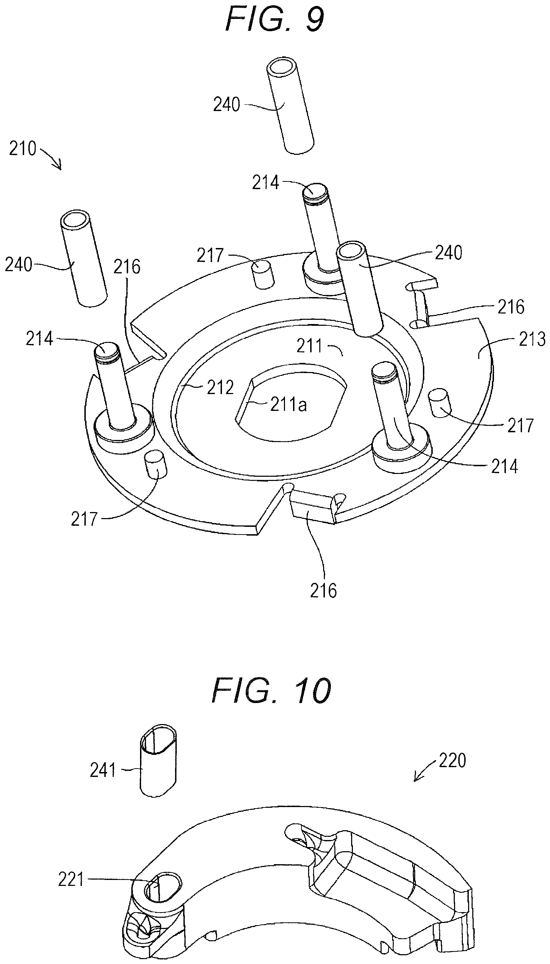

Further, as illustrated in Fig. 9, the centrifugal clutch 200 can be configured such that a pivot-point-side slide member 240 is provided between the swing support pin 214 and the pin slide hole 221 and the swing support pin 214 is slidably displaceably fitted through the pivot-point-side slide member 240. In this case, the pivot-point-side slide member 240 is a component arranged between the swing support pin 214 and the pin slide hole 221 to improve slidability therebetween. The pivot-point-side slide member 240 is formed in a cylindrical shape from various resin materials described above, and is rotatably slidably fitted onto the swing support pin 214.

The pivot-point-side slide member 240 is formed to have such inner and outer diameters that the pivot-point-side slide member 240 can rotatably slide on each of the swing support pin 214 and the pin slide hole 221, i.e., a dimensional tolerance as a clearance fit for each of the swing support pin 214 and the pin slide hole 221. According to such a configuration, in the centrifugal clutch 200, slide resistance between the swing support pin 214 and the pin slide hole 221 is reduced by the pivot-point-side slide member 240 so that both components can smoothly slide on each other and abrasion of both components can be prevented. Moreover, in the centrifugal clutch 200, the pivot-point-side slide member 240 is rotatably slidably provided at an outer peripheral portion of the swing support pin 214 so that the pivot-point-side slide member 240 can be easily assembled with the swing support pin 214.

Moreover, in a variation illustrated in Fig. 9, the pivot-point-side slide member 240 is formed in the cylindrical shape from the resin material, and is rotatably slidably provided at the outer peripheral portion of the swing support pin 214. In other words, the pivot-point-side slide member 240 is configured to function as a roller for the swing support pin 214. However, it is enough to provide the pivot-point-side slide member 240 between the swing support pin 214 and the pin slide hole 221 to slidably displace these components.

Thus, the pivot-point-side slide member 240 can be made of other materials than the resin material, such as a metal material. In this case, the pivot-point-side slide member 240 may be made of the same material as that of the swing support pin 214 or the pin slide hole 221, or may be made of a material different from that of the swing support pin 214 or the pin slide hole 221. In this case, the pivot-point-side slide member 240 is made of a more-easily-abradable material than the material(s) forming the swing support pin 214 and/or the pin slide hole 221, and therefore, abrasion of the swing support pin 214 and/or the pin slide hole 221 can be reduced. Alternatively, the pivot-point-side slide member 240 is made of a material (e.g., an aluminum material) having better slidability than that of the material(s) forming the swing support pin 214 and/or the pin slide hole 221, and therefore, the slidability between the swing support pin 214 and the pin slide hole 221 can be improved. Alternatively, the pivot-point-side slide member 240 can be also made of a material (e.g., a metal material or a ceramic material) having thermal resistance and abrasion resistance.

Further, the pivot-point-side slide member 240 can be provided in a non-rotatable non-slidable fixed state at the outer peripheral portion of the swing support pin 214. In this case, the pivot-point-side slide member 240 may be formed in a tubular shape fitted onto the swing support pin 214. Alternatively, a cutout portion can be formed at the swing support pin 214, and the pivot-point-side slide member 240 can be formed in a plate shape fitted in such a cutout portion and extending in a planar shape or an arc shape. In addition, the pivot-point-side slide member 240 can be also formed by resin material insert molding for the cutout portion formed at the swing support pin 214.

Moreover, the pivot-point-side slide member 240 can be also provided at the pin slide hole 221 in addition to or instead of the swing support pin 214. For example, as illustrated in Fig. 10, a pivot-point-side slide member 241 can be formed in a long tubular shape fitted in the inner peripheral surface of the pin slide hole 221. In this case, an inner peripheral portion of the pivot-point-side slide member 240 is formed with such a size that the swing support pin 214 can slide in the pivot-point-side slide member 240.

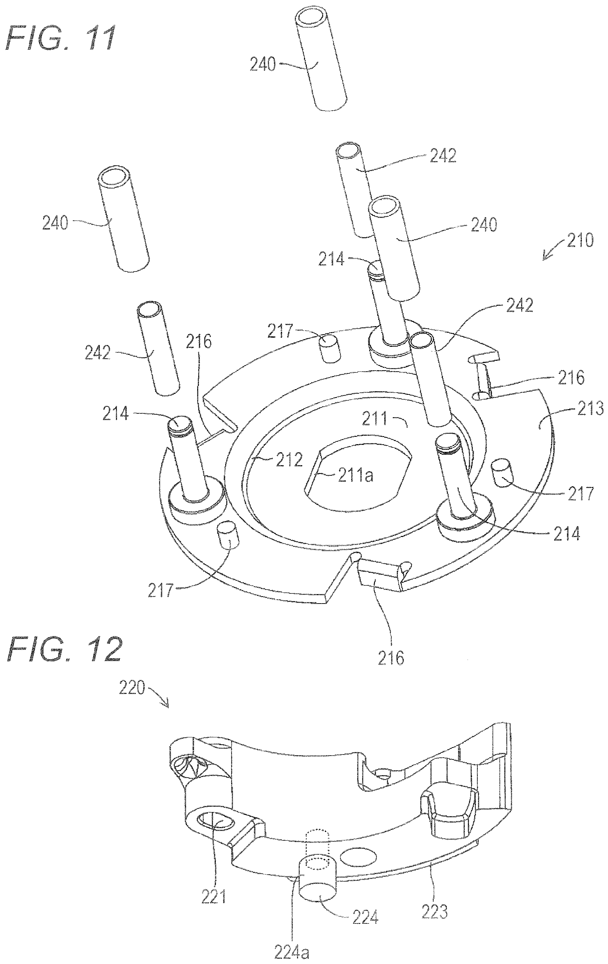

Further, the pivot-point-side slide member 240 may be directly provided on the swing support pin 214. As illustrated in Fig. 11, the pivot-point-side slide member 240 can be also provided at the swing support pin 214 through an auxiliary pivot-point-side slide member 242. The auxiliary pivot-point-side slide member 242 is a component provided between the swing support pin 214 and the pivot-point-side slide member 240 to slide these components. The auxiliary pivot-point-side slide member 242 is formed as a cylindrical body similar to the pivot-point-side slide member 240. In this case, the auxiliary pivot-point-side slide member 242 may be made of the same resin material as that of the pivot-point-side slide member 240, or can be also made of a material (e.g., a metal material) different from that of the pivot-point-side slide member 240. In addition, the auxiliary pivot-point-side slide member 242 may be formed rotatably slidably on the pivot-point-side slide member 240, and on the other hand, may be provided rotatably slidably or non-rotatably non-slidably on the swing support pin 214. According to such a configuration, the centrifugal clutch 200 can improve slidability between the swing support pin 214 and the pivot-point-side slide member 240, and can more smoothly turn and displace the clutch weight 220 relative to the clutch outer 230. Note that the auxiliary pivot-point-side slide member 242 can be also provided non-rotatably non-slidably on the pivot-point-side slide member 240. Moreover, two or more auxiliary pivot-point-side slide members 242 may be provided in an overlapping state.

Further, in the above-described embodiment, in the centrifugal clutch 200, the protruding body 224 is formed integrally with the clutch weight 220 from the same material as that of the clutch weight 220. However, the protruding body 224 can be formed from a body separated from the clutch weight 220. For example, as illustrated in Fig. 12, the centrifugal clutch 200 can be configured such that the protruding body 224 is formed in a round bar shape by means of the same material as that of the clutch weight 220 or a material (a metal material or a resin material) different from that of the clutch weight 220 and is attached to the surface of the clutch weight 220 facing the drive plate 210. In this case, the protruding body 224 may be inserted and attached into the clutch weight 220, or may be joined using, e.g., welding. Note that in Fig. 12, a portion of the protruding body 224 inserted into the clutch weight 220 is indicated by a dashed line.

In addition, in the above-described embodiment, the protruding body 224 is formed in a substantially quadrangular columnar shape having the curved slide portion 224a. However, the protruding body 224 can be formed in a circular columnar shape as illustrated in Fig. 12. Further, the slide portion 224a can be also formed in a planar shape. In these cases, the guide portion 216 may be formed as a flat surface parallel with the protruding body 224, or may be formed as an arc-shaped curved surface projecting in a raised shape to the protruding body 224.

Moreover, in the above-described embodiment, in the centrifugal clutch 200, the guide portion 216 and the protruding body 224 are both made of the metal materials. However, the centrifugal clutch 200 can be also configured such that one of portions of the guide portion 216 and the protruding body 224 sliding on each other is made of the metal material and the other one of these portions is made of various resin materials described above.

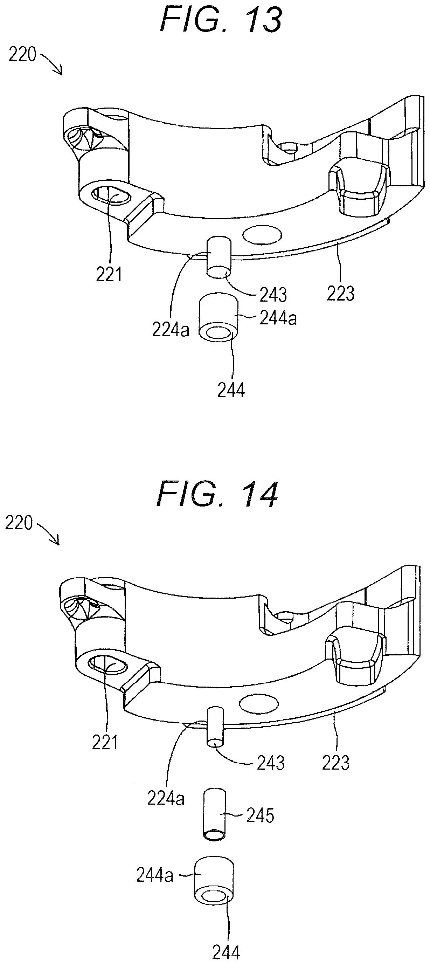

For example, as illustrated in Fig. 13, the centrifugal clutch 200 can be configured such that a circular columnar protruding body support pin 243 is provided to protrude toward the drive plate 210 from the surface of the clutch weight 220 facing the drive plate 210 and a protruding body 244 formed in a cylindrical shape from a resin material is fitted onto the protruding body support pin 243 in a rotatable slidable state or a non-rotatable non-slidable state. In this case, an outer peripheral surface of the protruding body 244 including a cylindrical body forms a slide portion 244a. According to such a configuration, the centrifugal clutch 200 can reduce, by the resin protruding body 244, slide resistance between the protruding body 244 and the guide portion 216 to smoothly slide both of these components and prevent abrasion of both of these components. Moreover, in a case where the protruding body 244 is rotatably slidably fitted onto the protruding body support pin 243, the centrifugal clutch 200 can more reduce the slide resistance between the guide portion 216 and the protruding body 244 to smoothly slide both of these components and prevent abrasion of both of these components. That is, the protruding body 244 can be formed as a cylindrical roller rotatably fitted onto the protruding body support pin 243.

Moreover, in a variation illustrated in Fig. 13, the protruding body 244 is formed in the cylindrical shape from the resin material, and is rotatably slidably provided at an outer peripheral portion of the protruding body support pin 243. However, it is enough to provide the protruding body 244 to face the guide portion 216 such that the protruding body 244 slides the guide portion 216 to push out the clutch weight 220.

That is, it is enough to form the protruding body 224, 244 and the guide portion 216 such that at least one of these components extends outward of the drive plate 210 toward the rear side in the rotary drive direction of the drive plate 210. In this case, it is enough that portions of the protruding body 224, 244 and the guide portion 216 extending outward of the drive plate 210 toward the rear side in the rotary drive direction of the drive plate 210 are formed as the entirety or part of the protruding body 224, 244 and the guide portion 216.

Thus, the protruding body 244 can be made of other materials than the resin material, such as a metal material (e.g., carbon steel, an iron-based sintered material, or an aluminum material). In this case, the protruding body 244 may be made of the same material as that of the protruding body support pin 243 or the guide portion 216, or may be made of a material different from that of the protruding body support pin 243 or the guide portion 216. Alternatively, the protruding body 244 is made of a more-easily-abradable material than the material(s) forming the protruding body support pin 243 and/or the guide portion 216, and therefore, abrasion of the protruding body support pin 243 and/or the guide portion 216 can be reduced. Alternatively, the protruding body 244 is made of a material (e.g., an aluminum material) having better slidability than that of the material(s) forming the protruding body support pin 243 and/or the guide portion 216, and therefore, slidability between the protruding body support pin 243 and the guide portions 216 can be improved. Alternatively, the protruding body 244 can be also made of a material (e.g., a metal material or a ceramic material) having thermal resistance and abrasion resistance.

Moreover, the protruding body 244 may be formed in a tubular shape fitted onto the protruding body support pin 243 in a case where the protruding body 244 is non-rotatably non-slidably provided at the outer peripheral portion of the protruding body support pin 243. Alternatively, a cutout portion can be formed at the protruding body support pin 243, and the protruding body 244 can be formed in a plate shape fitted in such a cutout portion and extending in a planar shape or an arc shape. Moreover, the protruding body 244 can be also formed by resin material insert molding for the cutout portion formed at the protruding body support pin 243.

Further, the protruding body 244 may be directly provided on the protruding body support pin 243. As illustrated in Fig. 14, the protruding body 244 can be also provided at the protruding body support pin 243 through an auxiliary swing-side slide member 245. The auxiliary swing-side slide member 245 is a component provided between the protruding body support pin 243 and the protruding body 244 to slide both of these components. The auxiliary swing-side slide member 245 is formed as a cylindrical body. In this case, the auxiliary swing-side slide member 245 may be made of the same resin material as that of the protruding body 244, or may be made of a material (e.g., a metal material) different from that of the protruding body 244. Moreover, the auxiliary swing-side slide member 245 may be formed rotatably slidably on the protruding body 244, and on the other hand, may be provided rotatably slidably or non-rotatably non-slidably on the protruding body support pin 243. According to such a configuration, the centrifugal clutch 200 can improve slidability between the protruding body support pin 243 and the protruding body 244, and can more smoothly turn and displace the clutch weight 220 relative to the clutch outer 230. Note that the auxiliary swing-side slide member 245 can be also provided non-rotatably non-slidably on the protruding body 244.

In addition, in each variation illustrated in Figs. 13 and 14, in the centrifugal clutch 200, the protruding body 244 is made of the resin material, and the guide portion 216 is made of the metal material. However, in the centrifugal clutch 200, the protruding body 244 and the guide portion 216 can be also made of the same material instead of these different materials. In this case, in the centrifugal clutch 200, one of portions of the protruding body 244 and the guide portion 216 sliding on each other may be made of the metal material, and the other one of these portions may be made of the resin material.

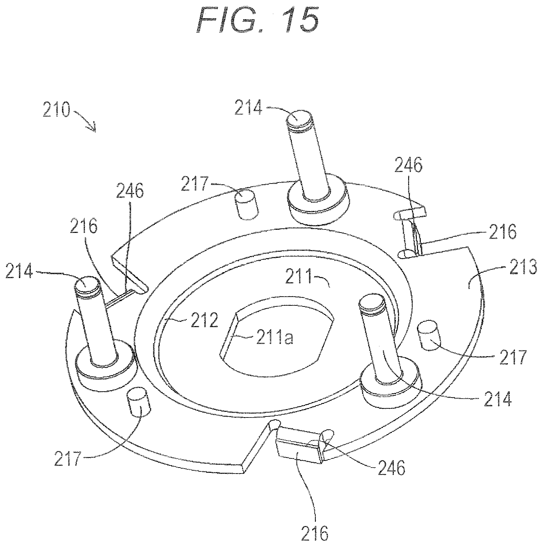

Thus, in the centrifugal clutch 200, the protruding body 244 can be made of the metal material, and the guide portion 216 can be made of the resin material. In this case, in the centrifugal clutch 200, a swing-side slide member 246 formed in a plate shape from various resin materials described above is, as illustrated in Fig. 15, bonded to a portion of the drive plate 210 facing the protruding body 244, and therefore, can be formed as the guide portion 216. The swing-side slide member 246 can be formed in a planar shape or a curved shape. Note that the swing-side slide member 246 may be made of other materials (e.g., a metal material) than the resin material, or may be formed in other shapes (e.g., a circular columnar shape or a cylindrical shape) than the plate shape.

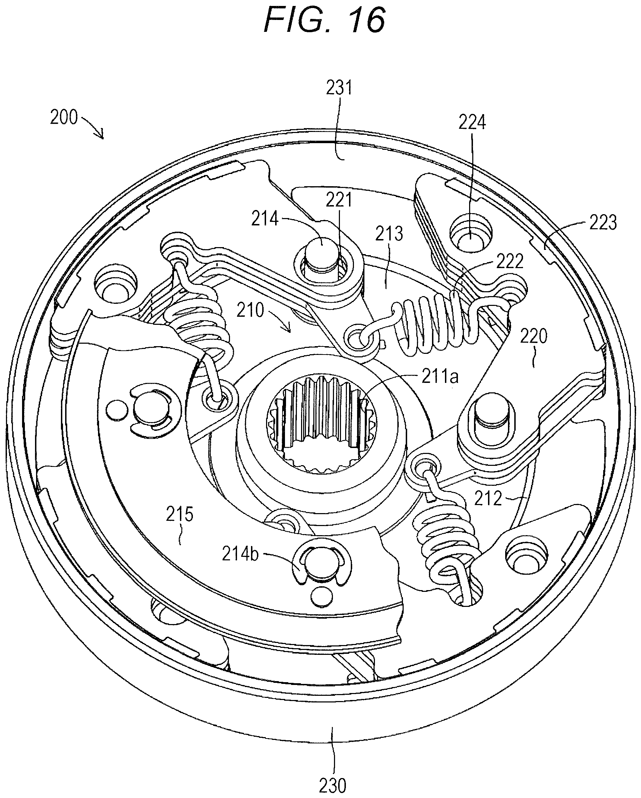

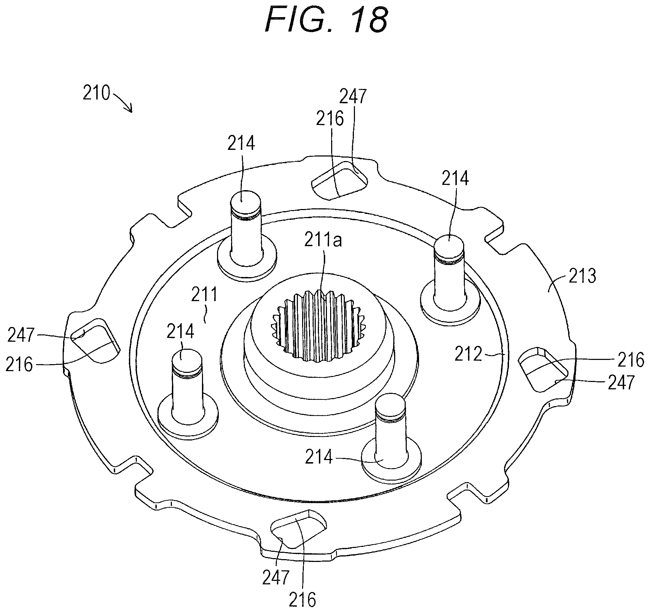

Moreover, in the above-described embodiment, in the centrifugal clutch 200, the guide portion 216 is formed in such a manner that part of the drive plate 210 is bent. However, the guide portion 216 can be formed by other methods than bending of the drive plate 210. For example, as illustrated in each of Figs. 16 to 18, the guide portion 216 can be formed in a though-hole shape at the flange portion 213 of the drive plate 210. In this case, the guide portion 216 can be formed by cutting or pressing. According to such a configuration, the centrifugal clutch 200 can suppress a decrease in stiffness of the guide portion 216 itself and the entirety of the drive plate 210.

Moreover, in this case, the guide portion 216 can have a stopper portion 247 configured to restrict sliding of the protruding body 224 on the guide portion. The stopper portion 247 is a portion for restricting displacement of the clutch shoe 223 of the clutch weight 220 toward the cylindrical surface 231 of the clutch outer 230. The stopper portion 247 is formed in a wall shape such that the protruding body 224 collides with the guide portion 216 on the front side in a rotation direction of the drive plate 210. According to such a configuration, the centrifugal clutch 200 defines an area where the clutch shoe 223 can contact the cylindrical surface 231 of the clutch outer 230, thereby preventing contact of the clutch weight 220 with the cylindrical surface 231.

Note that the centrifugal clutch 200 illustrated in each of Figs. 16 to 18 is configured as a wet type, each of four clutch weights 220 is formed in such a manner that multiple steel plates are stacked on each other and bonded to each other, and the pin-shaped protruding body 224 is press-fitted in such a clutch weight 220. That is, the centrifugal clutch according to the present invention can be configured as a dry type as in the above-described embodiment, and can be also configured as the above-described wet type.

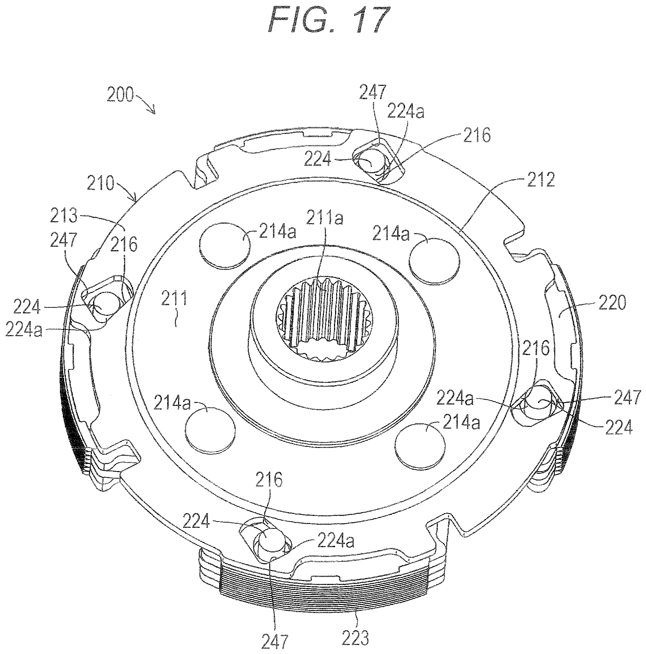

Moreover, in the centrifugal clutch 200, the through-hole 211a is formed in a cylindrical shape having a spline. The crankshaft extending from the engine (not shown) is spline-fitted in the through-hole 211a, and the drive shaft (not shown) is fitted onto an outer peripheral portion of the through-hole 211a. Further, the centrifugal clutch 200 is configured with no damper receiving pins 217 and no damper 218. In addition, Fig. 16 illustrates the E-ring 214b and the side plate with part of these components being omitted. Moreover, Fig. 17 does not show the clutch outer 230.

### LIST OF REFERENCE NUMERALS

- S: Clearance
- 100: Power transmission mechanism
- 101: Transmission
- 110: Drive pulley
- 111: Crankshaft
- 112: Stationary drive plate
- 112a: Radiation fin
- 113: Movable drive plate
- 114: Sleeve bearing
- 115: Roller weight
- 116: Lamp plate
- 120: V-belt
- 130: Driven pulley
- 131: Stationary driven plate
- 132: Driven sleeve
- 133: Drive shaft
- 134: Movable driven plate
- 135: Torque spring
- 200: Centrifugal clutch
- 210: Drive plate
- 211: Bottom portion
- 211a: Through-hole
- 212: Tube portion
- 213: Flange portion
- 214: Swing support pin
- 214a: Attachment bolt
- 214b: E-ring
- 215: Side plate
- 216: Guide portion
- 217: Damper receiving pin
- 218: Damper
- 220: Clutch weight
- 221: Pin slide hole
- 222: Coupling spring
- 223: Clutch shoe
- 224: Protruding body
- 224a: Slide portion
- 230: Clutch outer
- 231: Cylindrical surface
- 240, 241: Pivot-point-side slide member
- 242: Auxiliary pivot-point-side slide member
- 243: Protruding body support pin
- 244: Protruding body
- 244a: Slide portion
- 245: Auxiliary swing-side slide member
- 246: Swing-side slide member
- 247: Stopper portion

## Claims

1. A centrifugal clutch comprising:
a drive plate to be rotatably driven together with a driven pulley in response to drive force of an engine;
a clutch outer having, outside the drive plate, a cylindrical surface provided concentrically with the drive plate;
a clutch weight having a clutch shoe formed to extend along a circumferential direction of the drive plate and facing the cylindrical surface of the clutch outer, one end side of the clutch weight in the circumferential direction being rotatably attached onto the drive plate through a swing support pin and a pin slide hole, the other end side displacing toward a cylindrical surface side of the clutch outer;
a protruding body provided to protrude toward the drive plate from the clutch weight; and
a guide portion provided at the drive plate and allowing the protruding body to climb on the guide portion upon displacement of the other end side of the clutch weight, wherein
the swing support pin is provided one of the drive plate or the clutch weight, and is formed to extend toward the other one of the drive plate or the clutch weight, and
the pin slide hole is provided at the other one of the drive plate or the clutch weight and is formed in a long hole shape allowing backward displacement of one end side of the clutch weight in a rotary drive direction of the drive plate, and the swing support pin is slidably fitted in the pin slide hole.

2. The centrifugal clutch according to claim 1, wherein
the swing support pin is provided at the drive plate, and
the pin slide hole is provided at the clutch weight.

3. The centrifugal clutch according to claim 2, wherein the pin slide hole is made of a more-easily-abradable material than that of the swing support pin.

4. The centrifugal clutch according to any one of claims 1 to 3, wherein the pin slide hole is formed as a long hole with such a length that collision with the swing support pin is avoided even in a case where one end side of the clutch weight displaces backward in the rotary drive direction of the drive plate.

5. The centrifugal clutch according to any one of claims 1 to 4, wherein at least one of the protruding body or the guide portion includes a rotatably-supported roller.

6. The centrifugal clutch according to any one of claims 1 to 5, wherein the guide portion is formed in a state in which part of the drive plate is bent.

7. The centrifugal clutch according to any one of claims 1 to 5, wherein the guide portion is formed in a hole shape or a cutout shape at the drive plate.

8. The centrifugal clutch according to any one of claims 1 to 7, wherein the guide portion has a stopper portion configured to restrict displacement of the other end side of the clutch weight toward the cylindrical surface side of the clutch outer by collision with the protruding body.

9. The centrifugal clutch according to any one of claims 1 to 8, further comprising a pivot-point-side slide member provided between the swing support pin and the pin slide hole to slide the swing support pin and the pin slide hole, wherein
the swing support pin is slidably displaceably fitted through the pivot-point-side slide member.

10. The centrifugal clutch according to claim 9, wherein
each of the swing support pin and the pin slide hole is made of a metal material, and
the pivot-point-side slide member is made of a resin material.

11. The centrifugal clutch according to claim 9 or 10, wherein the pivot-point-side slide member is rotatably slidably fitted onto the swing support pin.

12. The centrifugal clutch according to any one of claims 9 to 11, further comprising an auxiliary pivot-point-side slide member provided between the swing support pin and the pivot-point-side slide member to slide the swing support pin and the pivot-point-side slide member.

13. The centrifugal clutch according to any one of claims 1 to 12, wherein one of portions of the protruding body and the guide portion sliding on each other is made of a metal material, and the other one of the portions is made of a resin material.

14. The centrifugal clutch according to any one of claims 1 to 13, wherein
the protruding body
is rotatably provided at a protruding body support pin provided at the clutch weight, and
includes an auxiliary swing-side slide member provided between the protruding body support pin and the protruding body to slide the protruding body support pin and the protruding body.
